# EUROPÄISCHE PATENTANMELDUNG

(11) **EP 2 228 113 A1**
(43) Veröffentlichungstag der Anmeldung: **15.09.2010**
(21) Anmeldenummer: 10155761.9
(22) Anmeldetag: 08.03.2010
(51) Int. Cl.: B01D 29/35, B01D 63/06

(54) **Filtereinrichtung für ein Kraftfahrzeug**

(30) Priorität: 06.03.2009 DE 102009011568
(71) Anmelder: MANN + HUMMEL GMBH, 71638 Ludwigsburg (DE)
(72) Erfinder: Micke, Michael, 70378 Stuttgart (DE); Jokschas, Günter, 71540 Murrhardt (DE); Weindorf, Martin, 70806 Kornwestheim (DE); Schreckenberger, Dieter, 71672 Marbach (DE); Dürr, Elke, 71679 Asperg (DE)

(57) **Zusammenfassung**

Die Erfindung betrifft eine Filtereinrichtung (1) für ein Kraftfahrzeug, umfassend: mindestens ein Filterelement (5) mit einem porösen keramischen Trägerkörper (6), in dem ein oder mehrere Kanäle (7) zur Aufnahme einer zu filternden Flüssigkeit (2) angebracht sind, sowie mit wandseitig an den Kanälen (7) gebildeten Filtermembranen (8), durch die ein Filtrat der Flüssigkeit in den Trägerkörper (6) eintreten und an einer Umfangsfläche (9) des Trägerkörpers (6) austreten kann. Die Filtereinrichtung (1) umfasst mindestens ein endseitig an dem Trägerkörper (6) vorgesehenes, elastisch deformierbares Ausgleichselement (16a, 16b) zur Aufnahme eines zusätzlichen Flüssigkeitsvolumens, das durch die sich beim Gefrieren ausdehnende Flüssigkeit (2) erzeugt wird.

## Beschreibung

### Technisches Gebiet

Die Erfindung betrifft eine Filtereinrichtung zur Aufreinigung von Flüssigkeiten in einem Kraftfahrzeug, z.B. von abgeschiedenem Dieselwasser aus Kraftstofffiltern, umfassend: mindestens ein Filterelement mit einem porösen keramischen Trägerkörper, in dem ein oder mehrere Kanäle zur Aufnahme einer zu filternden Flüssigkeit angebracht sind, sowie mit wandseitig an den Kanälen gebildeten Filtermembranen, durch die ein Filtrat der Flüssigkeit in den Trägerkörper eintreten und an einer Umfangsfläche des Trägerkörpers austreten kann.

### Stand der Technik

Eine solche Filtereinrichtung ist aus der DE 197 31 551 A1 bekannt geworden. Die dort verwendeten keramischen Gefüge des Trägerkörpers weisen zwar eine hohe Festigkeit auf, sind aber vergleichsweise spröde, d.h. unelastisch. Bei den keramischen Filtermembranen handelt es sich um poröse Strukturen mit einem hohen offenen Porenvolumen (in der Regel > 30 % offene Porosität). Sobald Wasser in diese Poren eindringt und gefriert, entstehen durch die Volumenausdehnung von Wasser (bis 10 %) zum Teil sehr hohe Spannungen, welche die spröde Keramik zerstören können. Um dies zu vermeiden bzw. um das keramische Gefüge zu entlasten, ist es günstig, das Totvolumen zu reduzieren, indem die Filtermembran wie in der oben beschriebenen Ausführung von Innen nach Außen angeströmt wird, da sich in diesem Fall das gefrierende Wasser durch die Membranporen in eine nach außen offene Umgebung ausdehnen kann, was wesentlich zur Verbesserung der Frostbeständigkeit beiträgt. Eine solche Maßnahme allein ist aber nicht ausreichend, um einen frostsicheren Betrieb der Filtereinrichtung zu gewährleisten.

Es ist die Aufgabe der Erfindung, eine Filtereinrichtung der eingangs genannten Art dahingehend weiterzubilden, dass diese unter Frostbedingungen zur Filterung einer Wasser enthaltenden Flüssigkeit eingesetzt werden kann.

### Offenbarung der Erfindung

Diese Aufgabe wird gelöst durch eine Filtereinrichtung der eingangs genannten Art, bei der mindestens ein elastisch deformierbares Ausgleichselement endseitig an dem Trägerkörper vorgesehen ist, um ein zusätzlichen Flüssigkeitsvolumen aufzunehmen, das durch die sich beim Gefrieren ausdehnende Flüssigkeit erzeugt wird.

Erfindungsgemäß wird vorgeschlagen, mindestens ein Ausgleichselement zur Aufnahme des sich in den Kanälen ausdehnenden Flüssigkeitsvolumens, welches in der Regel einen hohen Wasseranteil aufweist, endseitig, d.h. unterhalb bzw. oberhalb der Kanäle an dem Trägerkörper vorzusehen. Das Ausgleichselement muss unter dem beim Gefrieren entstehenden Eisdruck deformierbar sein und kann z.B. aus einem geschlossenporigen Kunststoffschaum (z.B. aus Werkstoffen wie EPDM, VMQ, PUR etc.) bestehen. Alternativ ist es auch möglich, kompressible mechanische Bauteile (z.B. mit innen liegenden Federn oder ähnlichem) zu verwenden, die in der Lage sind, das zusätzlich entstehende Wasservolumen beim Gefrieren sicher aufzunehmen.

Bevorzugt weist das Ausgleichselement eine elastisch deformierbare Membran auf, welche die Kanäle endseitig abdichtet. Die Membran dient der Abdichtung der Kanäle an ihrer Unterseite und wird beim Gefrieren der Flüssigkeit durch den Eisdruck nach außen gewölbt.

In einer vorteilhaften Weiterbildung weist die Filtereinrichtung ein Gehäuse zur Aufnahme des Filterelements auf, in dem eine Ausnehmung zur Aufnahme der Membran im deformierten Zustand gebildet ist. Die Ausnehmung kann z.B. eine Wölbung aufweisen, deren Abmessung so gewählt ist, dass die Membran bei der maximal möglichen elastischen Deformation die Ausnehmung vollständig ausfüllt, so dass die Membran an einer weiteren Deformation, welche die Membran ggf. zerstören könnte, gehindert ist.

Bevorzugt ist das Ausgleichselement kappenförmig ausgebildet und weist ein Halterungselement zur Halterung an der Umfangsfläche des Trägerkörpers oder der Umfangsfläche einer den Trägerkörper endseitig umschließenden Dichtungskappe auf. Das Halterungselement kann beispielsweise durch eine Rastnase gebildet werden, die zum Eingriff in eine an der Umfangsfläche des Trägerkörpers gebildete Nut vorgesehen ist.

Besonders bevorzugt ist das Halterungselement ein Dichtelement, insbesondere ein O-Ring, zur Abdichtung der Umfangsfläche des Trägerkörpers gegen ein Gehäuse, in dem das Filterelement angeordnet ist. Ein elastisches Halterungselement wie z.B. ein O-Ring kann neben der Funktion als Halteelement auch als Dichtelement zur Abdichtung der an der Umfangsfläche des Trägerelements gebildeten Reinseite gegen ein Gehäuse dienen, in dem das Filterelement angeordnet ist.

In einer vorteilhaften Ausführungsform weist mindestens eine den Trägerkörper endseitig umschließende Dichtungskappe ein Rastelement zur Verrastung an einem Gehäuse des Filterelements oder an einer weiteren, den Trägerkörper am gegenüberliegenden Ende umschließenden Dichtungskappe auf. Die Dichtungskappe(n) dienen einerseits zum Abdichten der entlang der Umfangsfläche des Trägerelements gebildeten Reinseite gegen das Gehäuse und können andererseits zur Fixierung des Filterelements im Gehäuse dienen, indem das Rastelement, z.B. eine Rastnase, an einem Gegenstück am Gehäuse verrastet. Die Fixierung des Filterelements kann zusätzlich oder alternativ auch dadurch erfolgen, dass eine oder beide Dichtungskappen eine an die Gehäuseform angepasste Geometrie aufweisen. Zwei miteinander verrastende Dichtungskappen sind insbesondere von Vorteil, wenn die Filtereinrichtung mehrere voneinander beabstandete Filterelemente aufweist, die mittels der verrasteten Dichtungskappen ihrer relativen Lage zueinander fixiert werden können. Es versteht sich, dass die zwei Dichtungskappen nicht zwingend unmittelbar miteinander verrastet werden müssen; vielmehr können die beiden Dichtungskappen auch an einem gemeinsamen Rastelement verrastet werden, welches den Trägerkörper an seiner Umfangsfläche umgibt.

Bevorzugt sind zwei oder mehr voneinander beabstandete Filterelemente mit Trägerkörpern mit bevorzugt kreisförmiger oder wabenförmiger Geometrie in einem gemeinsamen Gehäuse untergebracht. Vorteilhaft werden Außengeometrien für die Trägerkörper eingesetzt, die eine gleichmäßige Verteilung von Wandstärken bzw. einen möglichst geringen Volumenanteil des keramischen Gefüges im Vergleich zur Oberfläche aufweisen. Günstig ist hierbei, wenn ein möglichst freier Austritt aus jedem Kanal sichergestellt werden kann. Die Anordnung von mehreren Filterelementen, die kleinere Einheiten bilden, in einem gemeinsamen Gehäuse ist hierbei besonders bevorzugt, da das Wasser gleichzeitig an allen Umfangsflächen beim Gefrieren austreten kann und keine unnötigen bzw. sich negativ auswirkenden Zwischenflächen entstehen. Die Innengeometrie der einzelnen Trägerkörper, d.h. die Anordnung der Kanäle innerhalb des Trägerkörpers, kann hierbei auf unterschiedliche Weise erfolgen und z.B. wie in der CA 2192107, in der CA 2192109 oder der DE 197 31 551 A1 beschrieben ausgeführt sein.

In einer weiteren Ausführungsform ist der Trägerkörper aus einem Material mit hoher Festigkeit und Härte gebildet. Damit die beim Porenabschluss (letzte Phase des Gefriervorgangs) noch verbleibenden Kräfte sicher aufgefangen werden können, sollten hochfeste keramische Materialien mit hoher Reinheit (mind. 99%) und Härte verwendet werden. Beispiele für Werkstoffe mit hoher Härte bzw. Festigkeit sind Aluminiumoxid, Siliziumcarbid, Titandioxid, Mullit oder Zirkonoxid. Der Trägerkörper kann oxidische und/oder nichtoxidsiche Keramiken umfassen. Insbesondere umfasst der Trägerkörper Keramiken mit Aluminium-, Titan- und/oder Zirkonoxid oder Siliziumcarbid. Insbesondere besteht der Trägerkörper im Wesentlichen, d.h. zu mehr als 95 %, aus Aluminiumoxid. Der Trägerkörper kann aber auch zu mehr als 95 % aus Zirkonoxid oder aus Titanoxid bestehen.

Bei 4-Punkt Biegebruchfestigkeitstests sollten Trägerkörper, in der Form von keramischen Multikanalelementen mit 25mm Durchmesser und 19 hindurchlaufenden Löchern, die als Kanäle mit 3,5mm Durchmesser ausgebildet sind, bevorzugt eine Festigkeit von größer 50 MPa, bevorzugt größer 80 MPa erreichen, um die Frostsicherheit entsprechend zu verbessern.

Der Trägerkörper kann einen grobporigen Grundkörper aus Keramik umfassen. Dieser Grundkörper kann extrudiert sein. Der Grundkörper kann durch den Grundkörper hindurchlaufende Löcher aufweisen. Auf Oberflächen des Grundkörpers, insbesondere auf durch die Löcher gebildete Oberflächen des Grundkörpers, kann eine Membran aufgebracht sein. Diese Membran kann bevorzugt das selbe Material wie der Grundkörper umfassen. Alternativ ist auch eine andere Keramik für die Membran als für den Grundkörper denkbar. Die Membran kann als keramische Beschichtung mit kleineren Poren, z.B. 1 nm bis 10 nm, bevorzugt 3 nm bis 8 nm, auf dem Grundkörper aufgebracht sein. Die Beschichtung kann in einem Sol-Gel-Verfahren aufgebracht werden.

Insbesondere können Membranen auch mehrere Schichten umfassen. Z.B. können Zwischenschichten und Trennschichten verwendet werden. Insbesondere werden dieselben Werkstoffe wie im Stützkörper verarbeitet, lediglich in einer sehr viel feineren Körnung. Die Membranen werden in verschiedenen Schichten mit einem Partikelgrößengradient aufgebaut. Dies dient dazu, dass sie abschließende Membranschicht möglichst dünn aufgetragen werden kann, da bei dicken Trennschichten die Leistung deutlich niedriger ist. Die Porositäten solcher Zwischenschichten liegen bevorzugt zwischen 35 und 50%. Für die Materialien der Trennschicht kommen ebenfalls die Werkstoffe des Trägerköpers in Betracht. Aluminiumoxid kann hierbei allerdings i.d.R. nicht in der alpha-Phase (Korund) verwendet werden, da diese Partikel im Nanometermaßstab (genannt "nanoskalige Partikel") nicht erhältlich sind. Deshalb wird Aluminiumoxid in der gamma-Phase verwendet, die sehr fein erhältlich ist (bis < 10nm Partikelgröße).

Oberflächen des Grundköpers, aus denen kein gereinigtes Wasser ausdringen soll und Oberflächen an denen kein Diesel-Wasser-Gemisch in den Trägerkörper, z.B. an einer nicht mit Keramikmembran versehenen Oberfläche, eindringen soll, können mit einer Versiegelung versehen werden. Versiegelungen hierfür können z.B. Epoxyharze und/oder Polyurethan umfassen, insbesondere Schichten aus den Materialien. Versiegelungen können auch durch Einsaugen hochfeiner Partikel, z.B. von PTFE, und Verschließen der Poren durch die Partikel erzeugt werden.

Bevorzugt ist in die Kanäle des Filterelements ein Frostschutzmittel eingebracht. Damit nicht das Wasser im gesamten Filterelement (d.h. im Volumen des Trägerkörpers und im Kanalvolumen) gleichzeitig gefriert, ist es notwendig darauf zu achten, dass sich die Gefrierpunkte im Anströmbereich, d.h. in den Kanälen, und in den mit reinem Wasser gefüllten Poren des Trägerkörpers voneinander unterscheiden, was durch das Einbringen eines Frostschutzmittels bei der Herstellung des Trägerkörpers erreicht werden kann.

In einer vorteilhaften Ausführungsform ist ein an einem das Filterelement umgebenden Gehäuse vorgesehener Auslass für das Filtrat der Flüssigkeit unmittelbar oberhalb eines Dichtelements zur Abdichtung der zwischen der Umfangsfläche des Trägerkörpers und dem Gehäuse gebildeten Reinseite des Filterelements angeordnet. Um die Entstehung von Eisdruck in dem Volumen (Reinseite bzw. Permeatraum) zwischen Außenseite bzw. Umfangsfläche des Trägerkörpers und der Gehäusewandung zu verhindern, muss der Ablauf des Reinwassers am tiefsten Punkt des Gehäuses erfolgen. Hierdurch wird immer ein vollständiges Ablaufen des Wassers aus dem Gehäuse gewährleistet. Neben der Vermeidung des Druckes zwischen der Umfangsfläche des Trägerkörpers und der Gehäusewand kann beim Gefrieren auch das freie Austreten des Wassers an der Reinseite sichergestellt werden.

In einer weiteren vorteilhaften Ausführungsform umfasst die Filtereinrichtung eine Ablasseinrichtung, insbesondere ein Ventil, zum Ablassen der zu filternden Flüssigkeit aus den Kanälen. Eine weitere Option zur Verbesserung der Frostbeständigkeit ist das definierte Entleeren der in dem Trägerkörper gebildeten Kanäle nach dem Abstellen des Motors des Kraftfahrzeugs mittels einer Steuerungseinrichtung zur Ansteuerung einer Ablasseinrichtung, z.B. zum Öffnen eines an der Unterseite des Trägerkörpers angebrachten Ventils. Durch das Entleeren der Kanäle kann das in den Membranporen der Filtermembran gespeicherte Wasser in die Kanäle eindringen und es kann kein Eisdruck von den Kanälen auf das umgebende keramische Gefüge des Trägerkörpers entstehen.

Bei einer bevorzugten Ausführungsform umfasst die Filtereinrichtung zusätzlich eine Kühleinrichtung, insbesondere ein Peltier-Element, zum Einfrieren der Filtermembranen. Die Erfinder haben beobachtet, dass nach dem Einfrieren der Filtermembran(en) die Flussleistung nach der Filtration bestimmter Medien (z.B. Filtration von Kohlenwasserstoffemulsionen) sich z.T. deutlich verbessert hat. Je nach Zustand der Filtermembran (neu bzw. gebraucht) kann die Flussleistung verglichen mit dem letzten Wert vor dem Einfrieren, um 10 % bis 300% gesteigert werden. Dies kann u.a. damit begründet werden, dass das in der Deckschicht und in den Membranporen enthaltene Wasser sich beim Gefrieren ausdehnt und die Deckschicht ablöst. Um eine Flusssteigerung bewusst herbei zu führen, ist es möglich, das Gehäuse des Filterelements mit einer Kühleinrichtung zu versehen. Als Kühlaggregat kommt vorzugsweise ein sog. Peltier-Element zum Einsatz (Thermoelektrische Kühlung), da dieses ohne zusätzliche Kompression oder chemische Zusätze auskommt. Alternativ kann aber auch eine sog. Adsorber-Kühlung oder eine Kompressor-Kühlung, wie in der Technik allgemein bekannt, angewendet werden. Auf diese Weise ist eine deutliche Verlängerung der Betriebsdauer der Filtermembran möglich, da sich die abgeschiedenen Substanzen zumindest teilweise beim Gefrieren ablösen und die Flussleistung der Filtermembran gesteigert werden kann. Um die Effizienz der Kühlung zu erhöhen, kann eine geeignete Isolierung am Gehäuse vorgesehen sein.

Es versteht sich, dass einige der oben genannten Maßnahmen zum frostsicheren Betrieb der Filtereinrichtung nicht notwendiger Weise den Einsatz von Eisausgleichselementen erfordern, so dass diese Maßnahmen Aspekte der Erfindung darstellen, die auch in Alleinstellung, d.h. ohne die Kombination mit einem Eisausgleichselement einen schützenswerten Gegenstand darstellen. Insbesondere kann z.B. beim Vorsehen einer Ablasseinrichtung an dem Filterelement ggf. auf ein Eisausgleichselement verzichtet werden.

### Kurze Beschreibung der Zeichnungen

Weitere Einzelheiten der Erfindung werden nachfolgend anhand von Ausführungsbeispielen beschrieben. Hierbei zeigen:

Fign. 1a,b Ausführungsformen einer erfindungsgemäßen Filtereinrichtung mit zwei endseitig angeordneten Eis-Ausgleichselementen ohne bzw. mit einer Kühleinrichtung,

Fig. 2 die Abhängigkeit des Gefrierpunkts der zu filternden Flüssigkeit von der Anzahl der Austragvorgänge beim Zusatz eines Frostschutzmittels in einen Trägerkörper des Filterelements,

Fign. 3a-c drei Arten der Anordnung von Filterelementen in einem Gehäuse,

Fign. 4a,b eine perspektivische Ansicht sowie eine Schnittdarstellung einer Ausführungsform der Filtereinrichtung mit einer elastischen Membran als Eisausgleichselement und einer Dichtungskappe,

Fign. 5a,b eine perspektivische Ansicht sowie eine Schnittdarstellung einer weiteren Ausführungsform der Filtereinrichtung mit zwei Dichtungskappen,

Fign. 6a,b zwei Schnittdarstellungen eines Filterelements ohne Dichtungskappen, sowie

Fign. 7a,b eine Schnittdarstellung sowie eine perspektivische Darstellung eines weiteren Filterelements mit einer Elastomer-Membran und einem kappenförmigen Dichtungselement, die an einem den Trägerkörper umfangsseitig umgebenden Rastelement befestigt sind.

### Ausführungsform(en) der Erfindung

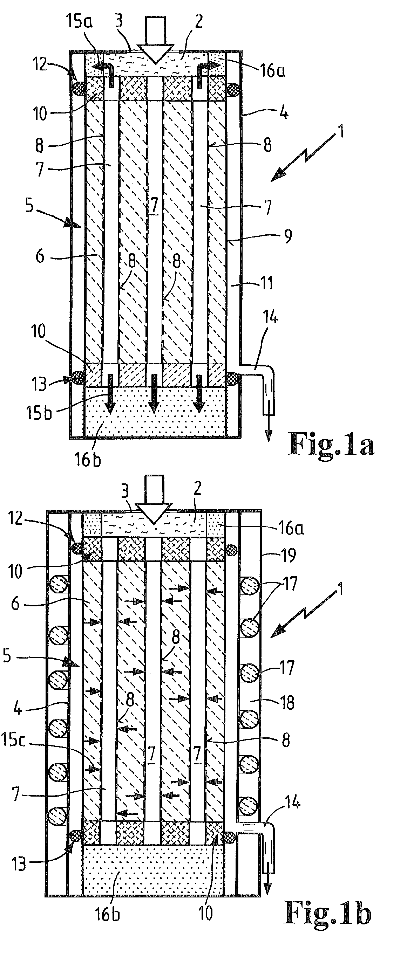

Fig. 1a zeigt eine Filtereinrichtung 1 zur Aufreinigung von Flüssigkeiten in einem Kraftfahrzeug, vorliegend zur Aufreinigung von abgeschiedenem Dieselwasser aus Kraftstofffiltern. Eine zu filternde Flüssigkeit 2 tritt in einem Anströmungsbereich (Rohseite) an einer Einlassöffnung 3 in ein Gehäuse 4 der Filtereinrichtung 1 ein, in der ein Filterelement 5 angeordnet ist. Das Filterelement 5 weist einen Trägerkörper 6 auf, der aus einem porösen keramischen Material, z.B. Aluminiumoxid oder Siliziumcarbid besteht und der eine (kreis-)zylindrische Geometrie besitzt. In dem Trägerkörper 6 befinden sich Kanäle 7 zur Aufnahme der zu filternden Flüssigkeit 2, deren Außenwände jeweils mit einer dünnen Filtermembran 8 beschichtet sind, für die der Trägerkörper 6 als Stützstruktur dient.

Die zu reinigende Flüssigkeit 2 wird an der Filtermembran 8 gefiltert, indem nur kleine Moleküle, bei der vorliegenden Anwendung Wassermoleküle, von der Filtermembran 8 durchgelassen werden, während größere Moleküle, bei denen es sich bei der vorliegenden Anwendung im Wesentlichen um im Kraftstoff enthaltene Kohlenwasserstoffe handelt, zurückgehalten werden. Die von der Filtermembran 8 durchgelassenen, das Filtrat bildenden Wasser-Moleküle treten in den porösen Trägerkörper 6 ein, wandern in diesem in radialer Richtung nach außen und treten an einer Umfangs- bzw. Mantelfläche 9 des Trägerkörpers 6 aus diesem aus. Um ein Eindringen der zu filternden Flüssigkeit 2 an den End- bzw. Stirnseiten in den Trägerkörper 6 zu verhindern, weist dieser an beiden Stirnseiten eine Versiegelung 10 auf.

Eine Reinseite 11 der Filtereinrichtung 1 wird durch einen Ringraum gebildet, der zwischen der Umfangsfläche 9 des Trägerkörpers 6 und der in Längsrichtung verlaufenden Innenwand des Gehäuses 4 verläuft. Zur Abdichtung des Ringraums, welcher die Reinseite 11 bildet, sind ein erstes, oberes Dichtungselement 12 und ein zweites, unteres Dichtungselement 13 jeweils in Form eines O-Rings zwischen der Innenwand des Gehäuses 4 und der Umfangsfläche 9 des Trägerelements 6 angebracht. Ein Abfluss 14 ist an dem Gehäuse 4 an der tiefsten Stelle, d.h. unmittelbar über dem unteren Dichtungselement 13 gebildet, um zu gewährleisten, dass die gefilterte Flüssigkeit (Reinwasser) vollständig aus dem Gehäuse 4 ablaufen kann. Dies ist insbesondere beim Gefrieren des Filtrats günstig, da bei einer solchen Anordnung des Abflusses 14 das schnelle Austreten des Wassers sicher gestellt werden kann und so ein Eisdruck des sich ausdehnenden Reinwassers in dem Ringraum bzw. der Reinseite 11 (auch Permeatbereich genannt) auf das Gehäuse 4 bzw. den Trägerkörper 6 vermieden werden kann.

Die Ausdehnung der gefrierenden Flüssigkeit 2 stellt jedoch nicht nur an der Reinseite 11, sondern auch an der Rohseite ein Problem dar, da sich das in den Kanälen 7 befindliche, ungereinigte Wasser ausdehnt und sowohl am oberen als auch am unteren Ende des Trägerkörpers 6 einen jeweils durch Pfeile angedeuteten Eisdruck 15a, 15b erzeugt.

Dieser Eisdruck 15a, 15b bzw. das beim Ausdehnen der Flüssigkeit 2 entstehende zusätzliche Flüssigkeitsvolumen wird an einem ringförmigen oberen sowie an einem plattenförmigen unteren Ausgleichselement 16a, 16b aufgenommen, die jeweils aus einem elastisch komprimierbaren, geschlossenporigen Kunststoffschaum bestehen, z. B. aus EPDM. Das obere, zwischen Trägerkörper 6 und Gehäuse 4 angeordnete Ausgleichselement 16a wird hierbei unter dem Eisdruck 15a in radialer Richtung komprimiert, wohingegen das untere, die Kanäle 7 im unkomprimierten Zustand endseitig abdichtende Ausgleichselement 16b durch den Eisdruck 15b in axialer Richtung komprimiert wird. Mit Hilfe der Ausgleichselemente 16a, 16b kann verhindert werden, dass der Eisdruck auf die Filtermembran 8 bzw. auf den Trägerkörper 6 so groß wird, dass diese beim Gefrieren der Flüssigkeit 2 beschädigt werden.

Es versteht sich, dass insbesondere am oberen Ende des Trägerkörpers 6 ggf. auf ein Eisausgleichselement verzichtet werden kann, wenn das Gehäuse 4 an der Oberseite des Trägerkörpers 6 aufliegt bzw. mit diesem stoffschlüssig z.B. durch Kleben oder auf andere Weise verbunden ist. Gegebenenfalls kann auch vollständig auf Eisausgleichselemente verzichtet werden, wenn an der Rohseite eine (nicht gezeigte) Ablasseinrichtung z.B. in Form eines Ventils angeordnet wird, die mit der Motorsteuerung des Kraftfahrzeugs gekoppelt ist und immer dann geöffnet wird, wenn der Motor abgestellt wird. Auf diese Weise kann ein definiertes Entleeren der Kanäle 7 erfolgen, so dass in dem Trägerkörper 6 gespeichertes Wasser in die Kanäle 7 eindringen kann und kein Eisruck von den Kanälen 7 auf das keramische Gefüge des Trägerkörpers 6 ausgeübt werden kann.

Ist die Problematik der sich beim Gefrieren ausdehnenden Flüssigkeit auf die oben beschriebene oder auf andere Weise gelöst worden, so kann das Gefrieren der Flüssigkeit 2 auch gezielt eingesetzt werden, um eine Flusssteigerung durch die Filtermembran 8 hervorzurufen. Fig. 1b zeigt eine Filtereinrichtung 1, die zu diesem Zweck eine Kühleinrichtung in Form mehrerer Peltier-Elemente 17 aufweist, die in einem weiteren Ringraum 18 angeordnet sind, der das Gehäuse 4 mantelseitig umgibt und der von außen durch eine Isolierung 19 begrenzt ist. Durch die gefrierende Flüssigkeit 2 wird ein durch Pfeile angedeuteter Eisdruck 15c des im Trägerkörper 6 bzw. den Filtermembranen 8 enthaltenen Wassers auf die Filtermembranen 8 ausgeübt, so dass sich eine an den Filtermembranen 8 während des Filterbetriebs gebildete Deckschicht aus in der zu filternden Flüssigkeit 2 enthaltenen Substanzen, z.B. Kohlenwasserstoffen, welche die Flussleistung der Filtermembran 8 reduzieren, zumindest teilweise ablösen kann.

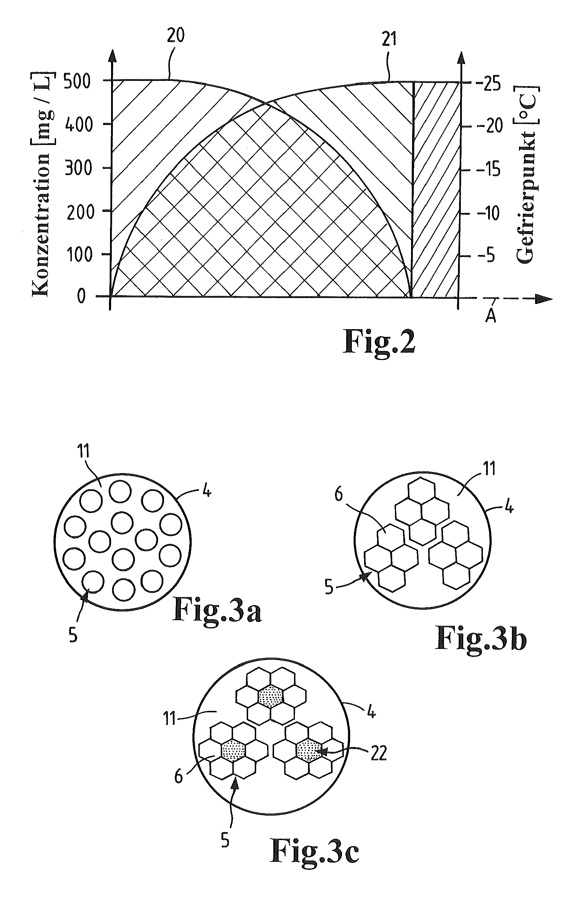

Insbesondere bei der Inbetriebnahme der Filtereinrichtung 1 ist ferner darauf zu achten, dass nicht die gesamte in der Filtereinrichtung 1 enthaltene Flüssigkeit 2 gleichzeitig gefriert, d.h. dass sich die Gefrierpunkte im Anströmbereich bzw. den Kanälen 7 und in den mit reinem Wasser gefüllten Poren des Trägerkörpers 6 voneinander unterscheiden. Bei jeder Membranfiltration ergibt sich an der Rohseite eine höher werdende Konzentration an Ionen oder Molekülen (auch Makromolekülen, z.B. abgeschiedenen Kohlenwasserstoffen). Diese Substanzen führen schon vergleichsweise schnell bzw. bei geringen Konzentrationen zu einer Gefrierpunktserniedrigung innerhalb der Kanäle 7. Dies führt dazu, dass zunächst bei einer Temperatur um ca. 0°C das Wasser innerhalb der Poren des Trägerkörpers 6 und anschließend bei Temperaturen deutlich unter 0°C die verunreinigte Flüssigkeit 2 in den Kanälen 7 mit der Filtermembran 8 gefriert. Durch die unterschiedlichen Gefrierpunkte kann sich das beim Gefrieren entstehende Volumen des Wassers im Trägerkörper 6 ungehindert in den Anströmbereich bzw. die Kanäle 7 ausdehnen. Da bei Inbetriebnahme einer neuen Filtereinrichtung 1 bzw. einer neuen Filtermembran 8 auch die Flüssigkeit 2 im Anströmbereich, insbesondere in den Kanälen 7 noch relativ geringe Konzentrationen an gelösten Substanzen aufweist, kann bei der Montage des Filterelements 5 in die Kanäle 7 des Trägerkörpers 6 ein Frostschutzmittel zugegeben werden. Bei der Wahl eines Frostschutzmittels mit einer Molekülgröße, für welche die Filtermembranen undurchlässig sind, kann das Frostschutzmittel in den Kanälen 7 des Anströmbereichs verbleiben. Bei Wahl eines Frostschutzmittels mit geeignet gewählten Molekülgrößen können die Moleküle im Verlauf des Betriebes der Filtermembran 8 sukzessive durch die Membranporen hindurch treten und zur Reinseite 11 abgegeben werden, wie in Fig. 2 gezeigt ist, welche links die Konzentration 20 von Frostschutzmittel und rechts die Konzentration 21 von in der Flüssigkeit 2 an der Rohseite gelösten, den Gefrierpunkt erniedrigenden Substanzen in Abhängigkeit von der Anzahl der Austragvorgänge A zeigt. In beiden Fällen kann durch den Zusatz eines Frostschutzmittels bei der Montage des Trägerkörpers sicher ein Gefrierpunkt < 0°C erreicht werden.

Alternativ zu der in Fign. 1a,b gezeigten Filtereinrichtung 1, welche ein Filterelement 5 mit nur einem Trägerkörper 6 aufweist, welcher das Gehäuse 4 nahezu vollständig ausfüllt, ist es auch möglich, zwei oder mehr Filterelemente in dem Gehäuse 4 unterzubringen, wie nachfolgend anhand der Fign. 3a-c dargestellt wird. Vorteilhaft werden hierbei solche AußenGeometrien für die Trägerkörper 6 eingesetzt, die eine gleichmäßige Verteilung von Wandstärken bzw. einen möglichst geringen Volumenanteil des keramischen Gefüges in dem Gehäuse 4 bzw. dem Permeatraum 11 erzeugen, so dass ein möglichst freier Austritt aus jedem Kanal möglich ist. Zu diesem Zweck sind mehrere kleinere Filterelement-Einheiten besonders geeignet, da das Wasser in diesem Fall beim Gefrieren gleichzeitig an allen Umfangsflächen austreten kann und keine unnötigen bzw. sich negativ auswirkenden Zwischenflächen entstehen. So können beispielsweise mehrere zylinderförmige Filterelemente 5 mit kreisförmiger Grundfläche mit zu Fign. 1a, b entsprechender Innengeometrie beabstandet voneinander in einem gemeinsamen Gehäuse 4 untergebracht sein, wie in Fig. 3a gezeigt ist. Es versteht sich, dass die Innengeometrie der Filterelemente 5 z.B. auch wie in den eingangs zitierten Druckschriften CA 2192107, CA 2192109 oder DE 197 31 551 A1 beschrieben ausgeführt sein kann.

Fign. 3b, c zeigen drei räumlich beabstandete Filterelemente 5, die jeweils mehrere wabenförmige, zylindrische Trägerkörper 6 mit sechseckiger Grundfläche aufweisen, welche jeweils an drei ihrer sechs Umfangsflächen miteinander verbunden sind. Bei dem in Fig. 3b gezeigten Beispiel bilden jeweils vier Trägerkörper 6 ein Filterelement 5, wobei jeweils drei Umfangsflächen der Trägerkörper 6 in den Permeatraum 11 weisen. In Fig. 3c weist das Filterelement 5 sechs äußere Trägerkörper 6 auf, die um ein inneres Trägerelement 22, angeordnet sind, das mit keiner Umfangsfläche zum Permeatraum 11 in Kontakt steht und daher nicht zur Filterung beiträgt.

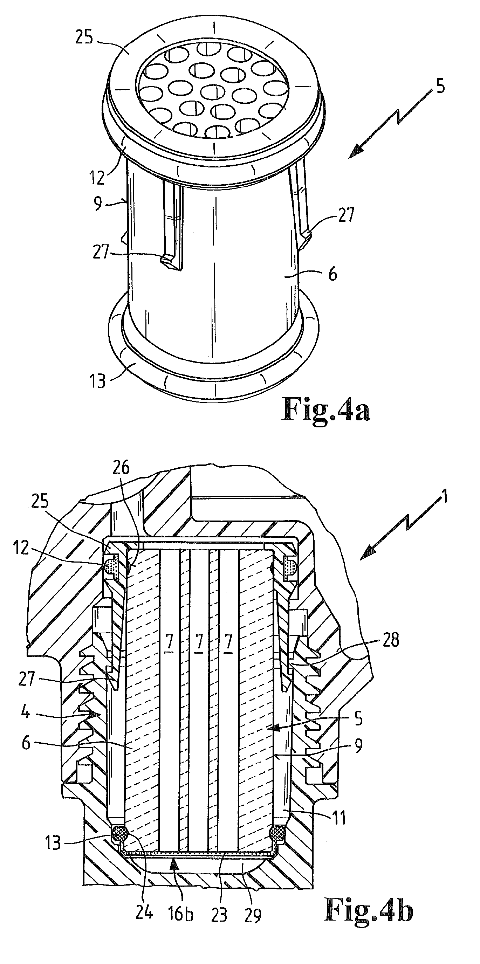

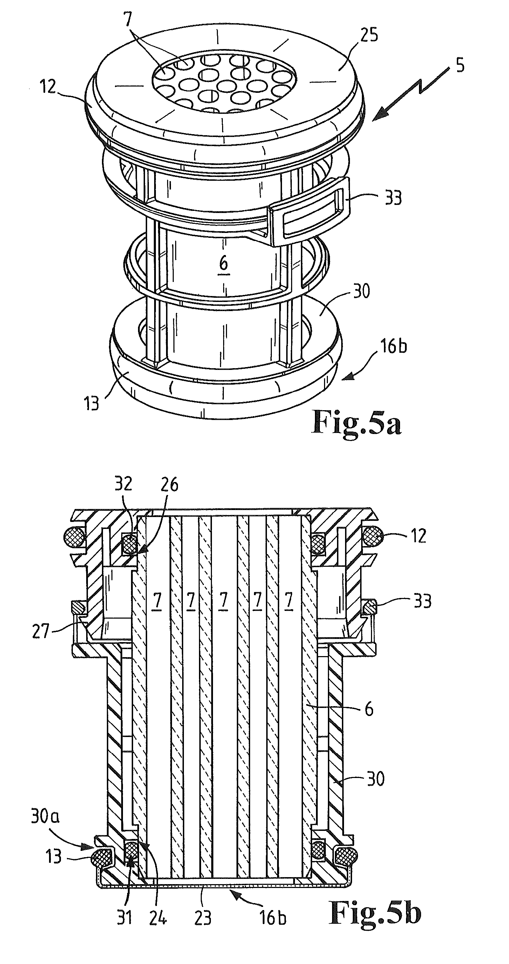

Im Folgenden werden anhand von Fign. 4a,b bzw. Fign. 5a,b an einer Filtereinrichtung 1 mit einem einzigen Filterelement 5, das wie in Fign. 1a,b aufgebaut ist, zwei unterschiedliche Arten der Anbringung eines unteren, kappenförmigen Eis-Ausgleichselements 16b beschrieben, das einstückig ausgebildet ist und eine Elastomer-Membran 23 zur Abdichtung der Kanäle 7 an der unteren Stirnseite des Trägerkörpers 6 aufweist. Die Membran 23 geht an ihrem Außenrand in einen die Umfangsseite 9 des Trägerkörpers 6 umschließenden Bereich über, der in einem O-Ring 13 endet.

In Fign. 4a, b ist eine Variante der Anbringung des Ausgleichselements 16b gezeigt, bei welcher der O-Ring 13 in eine Ringnut 24 an der Umfangsfläche 9 des Trägerkörpers 6 eingreift. Der elastische O-Ring 13 dient hierbei sowohl der Halterung des Ausgleichselements 16b am Trägerkörper 6 als auch der Abdichtung des die Reinseite bildenden Ringraums 11 gegen das in Fig. 4b gezeigte Gehäuse 4 des Filterelements 5. Zur Fixierung des Filterelements 5 an dem Gehäuse 4 sowie zur Abdichtung des Ringraums 11 nach oben dient eine obere Dichtungskappe 25, die durch einen O-Ring 12, der mit seiner Innenseite in eine am oberen Ende der Umfangsfläche 9 des Trägerkörpers 6 gebildete Ringnut 26 eingreift, am Filterelement 5 bzw. dem Trägerkörper 6 fixiert ist. Die obere Dichtungskappe 25 weist vier Rastelemente 27 in Form von Rastnasen auf, die an einem an dem Gehäuse 4 gebildeten Vorsprung 28 verrasten. Beim Gefrieren der Flüssigkeit 2 in den Kanälen 7 bei in dem Gehäuse 4 fixiertem bzw. verrastetem Filterelement 5 dehnt sich die Membran 23 in eine unter dieser angebrachte Ausnehmung 29 aus, die eine konkav gekrümmte Oberfläche zur Anlage der Membran 23 im deformierten Zustand aufweist.

Von dem in Fign. 4a, b gezeigten Filterelement 5 unterscheidet sich das in Fign. 5a, b gezeigte Filterelement 5 im Wesentlichen dadurch, dass zusätzlich zur oberen Dichtungskappe 25 eine untere Dichtungskappe 30 vorgesehen ist, die mittels eines O-Rings 31 an der unteren Ringnut 24 an dem Trägerkörper 6 gehalten ist. Entsprechend ist die obere Dichtungskappe 25 mittels eines weiteren O-Rings 32, der in die obere Ringnut 26 eingreift, an dem Trägerkörper 6 gehaltert. Die obere Dichtungskappe 25 greift mit Rastnasen 27 in ein stegförmiges Rastelement 33 der unteren Dichtungskappe 30 ein, um die beiden Dichtungskappen 25, 30 in ihrer relativen Lage zueinander zu fixieren. Der O-Ring 13 des Ausgleichselements 16b greift in eine Ringnut 30a der unteren Dichtungskappe 30 ein und dient wie in Fign. 4a,b der Abdichtung des Filterelements 5 gegen ein (nicht gezeigtes) Gehäuse. Entsprechend dient auch ein an der oberen Dichtungskappe 25 angebrachter, oberer O-Ring 12 zur Abdichtung des Filterelements 5 gegen ein (nicht gezeigtes) Gehäuse. Es versteht sich, dass die obere bzw. untere Dichtungskappe 25, 30 auch auf andere Weise an dem Trägerkörper 6 befestigt werden können, z.B. indem diese mit dem Trägerkörper 6 verklebt werden, wozu beispielsweise ein Kleber auf Epoxidharz-Basis eingesetzt werden kann.

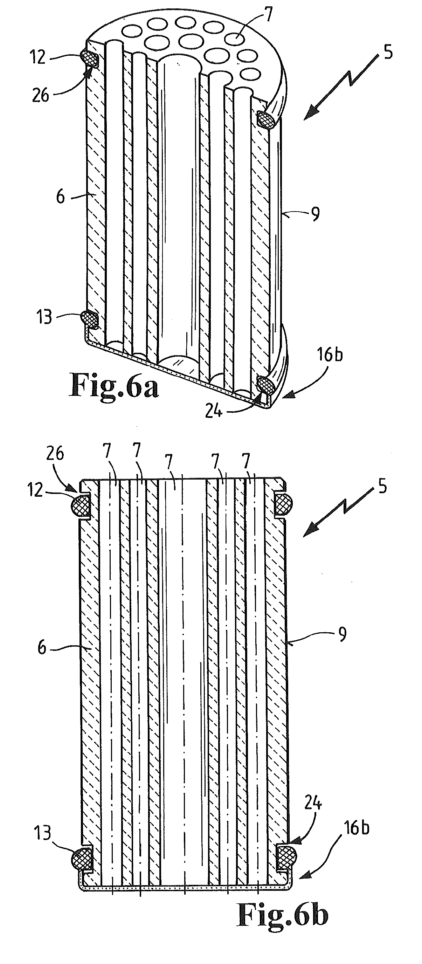

Fign. 6a, b zeigen eine weitere Ausführung des Filterelements 5, bei der wie in Fign. 4a,b gezeigt das untere, kappenförmige Ausgleichselement 16b mit dem O-Ring 13 in eine Ringnut 24 am unteren Ende der Umfangsfläche 9 des Trägerkörpers 6 eingreift. Zur Abdichtung des Filterelements 5 nach oben greift ein O-Ring 12 in eine am oberen Ende der Umfangsfläche 9 des Trägerkörpers 6 gebildete Ringnut 26 ein. Sowohl das kappenförmige Ausgleichselement 16b als auch der O-Ring 12 dienen der Abdichtung des Filterelements 5 gegen ein (nicht gezeigtes) Gehäuse, so dass in dieser Ausführung vollständig auf (starre) Dichtungskappen verzichtet werden kann. Es versteht sich, dass an Stelle eines handelsüblichen O-Rings 12 auch eine Formdichtung verwendet werden kann, welche den Trägerkörper 6 endseitig teilweise übergreift und dadurch einen Kantenschutz für den Trägerkörper 6 bildet.

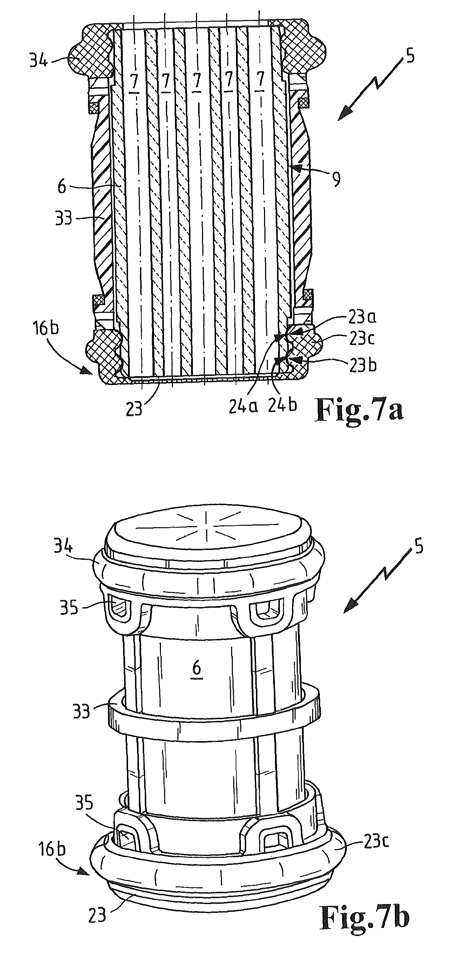

Eine Ausführung des Filterelements 5, bei der das untere, kappenförmige Ausgleichselement 16b ebenfalls durch eine Elastomer-Membran 23 gebildet ist, zeigen Fign. 7a,b. Die Membran 23 weist an ihrer Innenseite in einem die Umfangsseite 9 des Trägerkörpers 6 umschließenden Bereich zwei Ringwulste 23a, 23b auf, die in entsprechende Ringnuten 24a, 24b an der Umfangsseite 9 des Trägerkörpers 6 eingreifen. Zur Abdichtung des Trägerkörpers 6 gegen ein (nicht gezeigtes) Gehäuse ist an der Außenseite der Elastomer-Membran 23 ein weiterer ringförmiger Wulst 23c gebildet. Am oberen Ende des Trägerkörpers ist ein in gleicher Weise wie die Membran 23 geformtes, kappenförmiges Dichtelement 34 (Formdichtung) vorgesehen, welches im Gegensatz zur Membran 23 den Trägerkörper 6 am oberen Ende nur in seinem Randbereich übergreift. Das obere kappenförmige Dichtelement 34 und die Elastomer-Membran 23 weisen Eingriffsöffnungen 35 für Rastnasen auf, die an zwei einander gegenüberliegenden Enden eines Rastelements 33 gebildet sind, welches die Umfangsfläche 9 des Trägerkörpers 6 umgreift. Auf diese Weise kann eine Fixierung der Membran 23 und des Dichtelements 34 erreicht werden, ohne dass hierzu Dichtungskappen aus einem starren Material benötigt werden.

## Patentansprüche

1. Filtereinrichtung (1) für ein Kraftfahrzeug, umfassend: mindestens ein Filterelement (5) mit einem porösen keramischen Trägerkörper (6), in dem ein oder mehrere Kanäle (7) zur Aufnahme einer zu filternden Flüssigkeit (2) angebracht sind, sowie mit wandseitig an den Kanälen (7) gebildeten Filtermembranen (8), durch die ein Filtrat der Flüssigkeit (2) in den Trägerkörper (6) eintreten und an einer Umfangsfläche (9) des Trägerkörpers (6) austreten kann, **gekennzeichnet durch**
mindestens ein endseitig an dem Trägerkörper (6) vorgesehenes, elastisch deformierbares Ausgleichselement (16a, 16b) zur Aufnahme eines zusätzlichen Flüssigkeitsvolumens, das **durch** die sich beim Gefrieren ausdehnende Flüssigkeit (2) erzeugt wird.

2. Filtereinrichtung nach Anspruch 1, bei der das Ausgleichselement (16b) eine elastisch deformierbare Membran (23) aufweist, welche die Kanäle (7) endseitig abdichtet.

3. Filtereinrichtung nach Anspruch 2, weiter umfassend ein Gehäuse (4) zur Aufnahme des Filterelements (5), in dem eine Ausnehmung (29) zur Aufnahme der Membran (23) im deformierten Zustand gebildet ist.

4. Filtereinrichtung nach einem der vorhergehenden Ansprüche, bei der das Ausgleichselement (16b) kappenförmig ausgebildet ist und ein Halterungselement (13) zur Halterung an der Umfangsfläche (9) des Trägerkörpers (6) oder der Umfangsfläche einer den Trägerkörper (6) endseitig umschließenden Dichtungskappe (30) aufweist.

5. Filtereinrichtung nach Anspruch 4, bei der das Halterungselement ein Dichtelement, insbesondere ein O-Ring (13), zur Abdichtung der Umfangsfläche (9) des Trägerkörpers (6) gegen ein Gehäuse (4) ist, in dem das Filterelement (5) angeordnet ist.

6. Filtereinrichtung nach einem der vorhergehenden Ansprüche, bei der mindestens eine den Trägerkörper (6) endseitig umschließende Dichtungskappe (25, 30) ein Rastelement (27, 33) zur Verrastung an einem Gehäuse (4) des Filterelements (5) oder an einer weiteren, den Trägerkörper (6) am gegenüberliegenden Ende umschließenden Dichtungskappe (30, 25) aufweist.

7. Filtereinrichtung nach einem der vorhergehenden Ansprüche, bei der zwei oder mehr voneinander beabstandete Filterelemente (5) mit Trägerkörpern (6) mit bevorzugt kreisförmiger oder wabenförmiger Geometrie in einem gemeinsamen Gehäuse (4) untergebracht sind.

8. Filtereinrichtung nach einem der vorhergehenden Ansprüche, bei dem der keramische Trägerkörper (6) aus einem Material mit hoher Festigkeit und Härte gebildet ist.

9. Filtereinrichtung nach einem der vorhergehenden Ansprüche, bei der in die Kanäle (7) des Filterelements (5) ein Frostschutzmittel eingebracht ist.

10. Filtereinrichtung nach einem der vorhergehenden Ansprüche, bei der ein an einem das Filterelement (5) umgebenden Gehäuse (4) vorgesehener Auslass (14) für das Filtrat der Flüssigkeit (2) unmittelbar oberhalb eines Dichtelements (13) zur Abdichtung der zwischen der Umfangsfläche (9) des Trägerkörpers (6) und dem Gehäuse (4) gebildeten Reinseite (11) des Filterelements (5) angeordnet ist.

11. Filtereinrichtung nach einem der vorhergehenden Ansprüche, weiter umfassend eine Ablasseinrichtung, insbesondere ein Ventil, zum Ablassen der zu filternden Flüssigkeit aus den Kanälen (7).

12. Filtereinrichtung nach einem der vorhergehenden Ansprüche, weiter umfassend: eine Kühleinrichtung (17), insbesondere ein Peltier-Element, zum Einfrieren der Filtermembranen (8).
